(19) **Europäisches Patentamt / European Patent Office / Office européen des brevets**

(11) **EP 1 865 227 A1**

(12) # EUROPEAN PATENT APPLICATION

(43) Date of publication:
**12.12.2007 Bulletin 2007/50**

(51) Int Cl.:
*F16H 61/04* (2006.01)   *F16H 61/08* (2006.01)
*F16H 61/662* (2006.01)   *B60W 10/06* (2006.01)
*B60W 10/10* (2006.01)

(21) Application number: **07011173.7**

(22) Date of filing: **06.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **08.06.2006 JP 2006159698**

(71) Applicants:
• **NISSAN MOTOR CO., LTD.**
  **Yokohama-shi,**
  **Kanagawa 221-0023 (JP)**
• **JATCO Ltd**
  **Fuji-shi,**
  **Shizuoka 417-8585 (JP)**

(72) Inventors:
• **Kadono, Ryouji**
  **Atsugi-shi**
  **Kanagawa 243-0192 (JP)**
• **Wakuda, Kouji**
  **Atsugi-shi**
  **Kanagawa 243-0192 (JP)**

• **Iriyama, Masahiro**
  **Atsugi-shi**
  **Kanagawa 243-0192 (JP)**
• **Ootaki, Ryouichi**
  **Atsugi-shi**
  **Kanagawa 243-0192 (JP)**
• **Kimura, Yusuke**
  **Fuji-shi**
  **Shizuoka 417-8585 (JP)**
• **Ochiai, Tatsuo**
  **Fuji-shi**
  **Shizuoka 417-8585 (JP)**
• **Kobayashi, Atsufumi**
  **Fuji-shi**
  **Shizuoka 417-8585 (JP)**
• **Wakabayashi, Suichi**
  **Fuji-shi**
  **Shizuoka 417-8585 (JP)**

(74) Representative: **Grünecker, Kinkeldey, Stockmair & Schwanhäusser**
**Anwaltssozietät**
**Maximilianstrasse 58**
**80538 München (DE)**

(54) **Shift-shock reducing apparatus of power train**

(57)    In a shift-shock reducing apparatus of a power train employing an engine (1) and an automatic transmission (2), an engine controller (5) executes engine-torque correction for canceling an inertia torque generated owing to a change in transmission input speed (Ni) during a shift, for shift-shock reduction. A transmission controller (6) includes a shift-speed correction circuit (S3-S4) for compensating for a shift speed of the automatic transmission (2) depending on engine load (TVO), so as to effectively suppress the generated inertia torque, thereby aimfully reducing or suppressing shift shocks.

FIG.4A
FIG.4B
FIG.4C
FIG.4D
FIG.4E
FIG.4F

EP 1 865 227 A1

## FIG.5A
COMMANDED SHIFT STEP

5TH SPEED

4TH SPEED

t1    t2

## FIG.5B
LOWER-SPEED SIDE

COMMANDED TRANSMISSION RATIO
(WITH NO SHIFT-SPEED CONTROL)

4TH-SPEED EQUIVALENT
TRANSMISSION RATIO

TRANSMISSION RATIO

5TH-SPEED EQUIVALENT
TRANSMISSION RATIO

TARGET TRANSMISSION RATIO
(WITH SHIFT-SPEED CONTROL)

TIME

## FIG.5C
ABSORBED INERTIA TORQUE
(NEGATIVE INERTIA TORQUE)

0

TIME

## FIG.5D
TARGET ENGINE TORQUE
(tTe)

(Temax)   β

ΔTeup

0

TIME

## FIG.5E
THROTTLE OPENING TVO

FULL THROTTLE

0

TIME

## FIG.5F
VEHICLE ACCELERATION

0

TIME

2

**Description**

**TECHNICAL FIELD**

The present invention relates to a shift-shock reducing apparatus of a power train employing an engine and an automatic transmission, and specifically to the improvement of an automatic-transmission shift-shock reduction control technology capable of reducing shift shocks caused by positive and negative inertia torques generated during upshifting or downshifting.

**BACKGROUND ART**

During a shift of an automatic transmission, a change in the transmission input speed takes place due to a change in the transmission ratio. An inertia torque, generated owing to the transmission input speed change, results in a shift shock.

When the automatic transmission is upshifted from a lower speed side transmission ratio to a higher speed side transmission ratio, the transmission input speed decreases according to a decrease in the transmission ratio. Owing to the transmission input speed decrease, a positive inertia torque (in other words, inertia torque release) is generated and thus the engine torque is increased by the positive inertia torque. This results in shift shocks having a pop-up feeling of the torque.

Conversely when the automatic transmission is downshifted from a higher speed side transmission ratio to a lower speed side transmission ratio, the transmission input shaft speed increases according to an increase in the transmission ratio. Owing to the transmission input speed increase, a negative inertia torque (in other words, inertia torque absorption) is generated and thus the engine torque is decreased by the negative inertia torque. This results in shift shocks having a pop-down feeling of the torque.

In recent years, there have been proposed and developed various power-train shift-shock reducing devices capable of reducing shift shocks, arising from positive and negative inertia torques generated during shifting. One such power-train shift-shock reducing device has been disclosed in Japanese Patent Provisional Publication No. 11-020512 (hereinafter is referred to as "JP11-020512"), corresponding to U.S. Pat. No. 5,976,054, issued on Nov. 2, 1999. The shift-shock reducing device disclosed in JP11-020512 is exemplified in a power train constructed by an engine and a continuously variable transmission (CVT). Concretely, in the device disclosed in JP11-020512, engine torque is compensated for so as to cancel an inertia torque generated owing to a transmission input speed change during a shift of the CVT, thus reducing a shift shock.

More concretely, during an upshift, in order to cancel shift shocks having a pop-up feeling of engine torque, arising from the positive inertia torque (i.e., inertia torque release), a so-called torque-down (torque-decrease) compensation for engine torque is executed to reduce the shift shocks.

Conversely during a downshift, in order to cancel shift shocks having a pop-down feeling of engine torque, arising from the negative inertia torque (i.e., inertia torque absorption), a so-called torque-up (torque-increase) compensation for engine torque is executed to reduce the shift shocks.

**SUMMARY OF THE INVENTION**

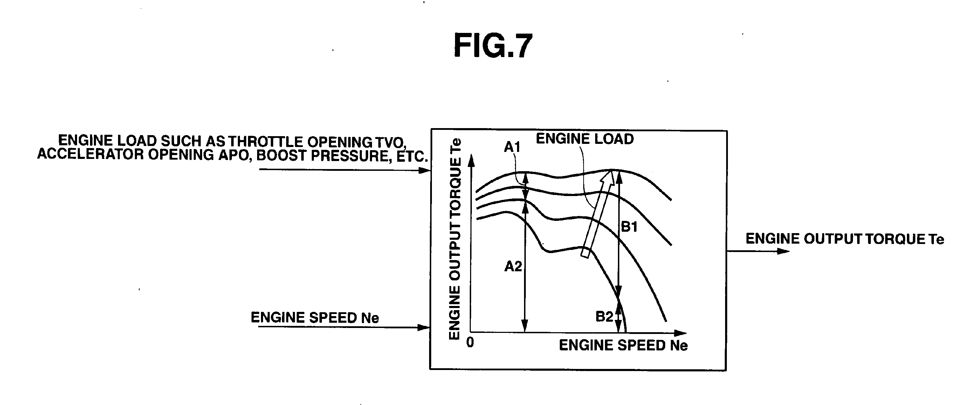

As shown in Fig. 7, engine output torque Te changes depending on engine load, such as a throttle opening TVO, an accelerator-pedal depression degree (an accelerator opening) APO, a boost pressure, and the like. Roughly speaking, engine output torque Te changes depending on engine speed Ne as seen in Fig. 7. Also, engine output torque Te tends to increase, as the engine load increases according to an increase in depression of the accelerator pedal.

Therefore, during high engine load operation, an engine torque-increase margin A1 between the current actual engine torque value, determined based on both the engine load condition and engine speed Ne, and a maximum engine torque value corresponding to the maximum engine load, tends to decrease. In other words, an engine torque-decrease margin A2 between the current actual engine torque value and a minimum engine torque value corresponding to the minimum engine load, tends to increase.

In contrast to the above, during low engine load operation, an engine torque-increase margin B1 between the current actual engine torque value, determined based on both the engine load condition and engine speed Ne, and a maximum engine torque value corresponding to the maximum engine load, tends to increase. In other words, an engine torque-decrease margin B2 between the current actual engine torque value and a minimum engine torque value corresponding to the minimum engine load, tends to decrease. For the reasons discussed above, in the conventional shift-shock reduction technology as disclosed in JP11-020512, there are the following drawbacks.

During an upshift of an automatic transmission, shift shocks (having a pop-up feeling of the torque) occur owing to inertia torque release, and thus the torque-down (torque-decrease) compensation for engine torque is executed to cancel the positive inertia torque for shift-shock reduction. However, when an upshift occurs under low engine load condition, there is a possibility that the engine torque cannot be satisfactorily reduced by a torque-decrease value required for shift-shock reduction, because of a comparatively narrow engine torque-decrease margin (see the margin B2 in Fig. 7) obtainable during the low load condition. This leads to an inadequate shift-shock reducing action.

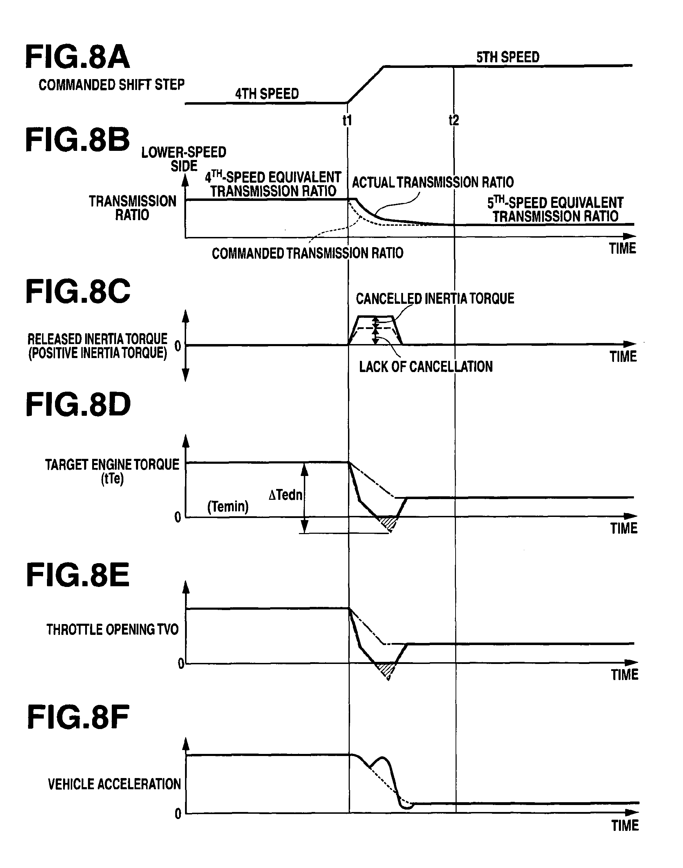

As seen from time charts of Figs. 8A-8F, suppose that a transmission-ratio command indicative of a target transmission ratio (see the characteristic curve indicated by the broken line in Fig. 8B) is generated in response to an output of a command for an upshift from a fourth-speed gear to a fifth-speed gear at the time t1 of Fig. 8A. Suppose that the actual transmission ratio begins to change with a predetermined time delay from the time t1, and thereafter, the 4→5 upshift has been completed at the time t2.

A positive inertia torque (see the inertia torque release indicated by the solid line in Fig. 8C just after the time t1) is generated owing to a fall in transmission input speed, occurring due to the actual transmission ratio change indicated by the solid line in Fig. 8B. A target engine torque tTe, indicated by the broken line in Fig. 8D, is generally set to directly reflect an engine torque-down value ΔTedn, required for reducing a shift shock by canceling the positive inertia torque. To realize the calculated target engine torque tTe indicated by the broken line in Fig. 8D and directly reflecting engine torque-down value ΔTedn, a throttle opening TVO should be set or controlled as indicated by the broken line in Fig. 8E. However, the hatched area (the right-hand diagonal shading area) in Fig. 8E indicates a minus throttle opening less than zero. As a matter of course, it is impossible to set the throttle opening TVO to a negative throttle opening. Thus, the actual throttle opening is controlled as indicated by the solid line in Fig. 8E. As discussed above, regardless of the negative target engine torque tTe indicated by the broken line in Fig. 8D, the actual engine torque never becomes less than a minimum engine torque value Temin, but varies as indicated by the solid line in Fig. 8D. This leads to an insufficient engine torque-decrease action with respect to the desired engine torque-down value ΔTedn. As a result, the positive inertia torque indicated by the solid line in Fig. 8C is merely canceled to such an extent as indicated by the broken line in Fig. 8C. In other words, the still existing positive inertia torque, such as indicated by the broken line in Fig. 8C, disturbs a shift shock from being reduced to below a desired shock-reduction rate. As can be seen from the time rate of change in vehicle acceleration indicated by the solid line in Fig. 8F, the still existing positive inertia torque causes positive and negative fluctuations in longitudinal acceleration of the vehicle, that is, remarkable longitudinal shift shocks.

During a downshift of the automatic transmission, shift shocks (having a pop-down feeling of the torque) occur owing to inertia torque absorption, and thus the torque-up (torque-increase) compensation for engine torque is executed to cancel the negative inertia torque for shift-shock reduction. However, when a downshift occurs under high engine load condition, there is a possibility that the engine torque cannot be increased by a torque-increase value required for shift-shock reduction, because of a comparatively narrow engine torque-increase margin (see the margin A1 in Fig. 7) obtainable during the high load condition. This also leads to an inadequate shift-shock reducing action.

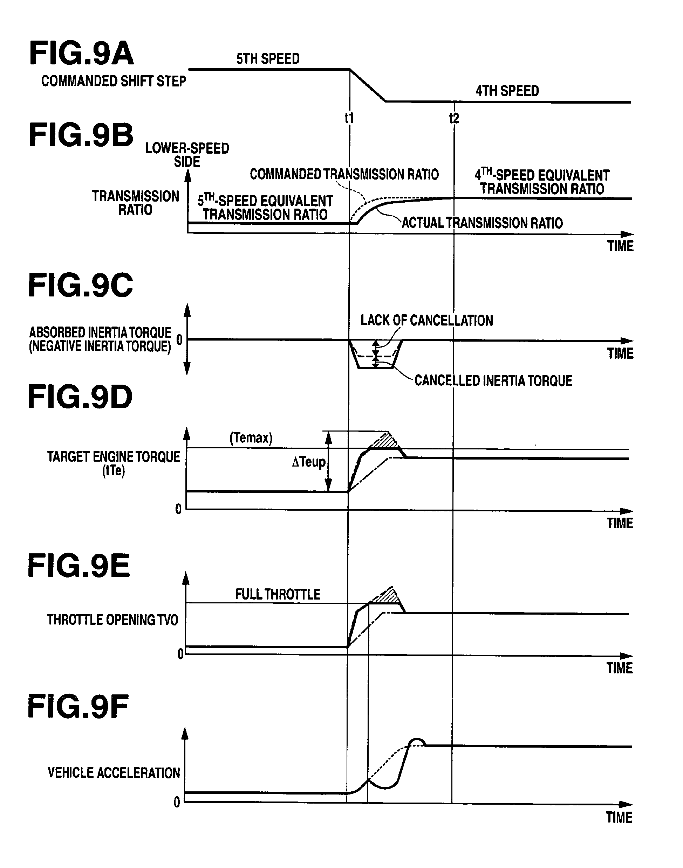

As seen from time charts of Figs. 9A-9F, suppose that a transmission-ratio command indicative of a target transmission ratio (see the characteristic curve indicated by the broken line in Fig. 9B) is generated in response to an output of a command for a downshift from a fifth-speed gear to a fourth-speed gear at the time t1 of Fig. 9A. Suppose that the actual transmission ratio begins to change with a predetermined time delay from the time t1, and thereafter, the 5→4 downshift has been completed at the time t2.

A negative inertia torque (see the inertia torque absorption indicated by the solid line in Fig. 9C just after the time t1) is generated owing to a rise in transmission input speed, occurring due to the actual transmission ratio change indicated by the solid line in Fig. 9B. A target engine torque tTe, indicated by the broken line in Fig. 9D, is generally set to directly reflect an engine torque-up value ΔTeup, required for reducing a shift shock by canceling the negative inertia torque. To realize the calculated target engine torque tTe indicated by the broken line in Fig. 9D and directly reflecting engine torque-up value ΔTeup, throttle opening TVO should be set or controlled as indicated by the broken line in Fig. 9E. However, the hatched area (the right-hand diagonal shading area) in Fig. 9E indicates an impossible throttle opening exceeding a full throttle (a maximum throttle opening). As a matter of course, it is impossible to set throttle opening TVO to the impossible throttle opening exceeding a full throttle. Thus, the actual throttle opening is controlled as indicated by the solid line in Fig. 9E. As discussed above, regardless of the impossible target engine torque tTe indicated by the broken line in Fig. 9D and exceeding a maximum engine output torque value Temax, the actual engine torque never exceeds the maximum engine torque value Temax, but varies as indicated by the solid line in Fig. 9D. This leads to an insufficient engine torque-increase action with respect to the desired engine torque-up value ΔTeup. As a result, the negative inertia torque indicated by the solid line in Fig. 9C is merely canceled to such an extent as indicated by the broken line in Fig. 9C. In other words, the still existing negative inertia torque, such as indicated by the broken line in Fig. 9C, disturbs a shift shock from being reduced to below a desired shock-reduction rate. As can be seen from the time rate of change in vehicle acceleration indicated by the solid line in Fig. 9F, the still existing negative inertia torque causes positive and negative fluctuations in longitudinal acceleration of the vehicle, that is, remarkable longitudinal shift shocks.

The inventive concept of the present invention is created based on the viewpoint that a lack of engine torque-decrease margin B2 (see Fig. 7) and a lack of engine torque-increase margin A1 (see Fig. 7), giving the cause of an inadequate shift-shock reduction, are both determined based on engine load.

It is, therefore, in view of the previously-described disadvantages of the prior art, an object of the invention to provide a shift-shock reducing apparatus of a power train, which is capable of eliminating or reducing the problem of an inadequate shift-shock reduction by compensating for a speed for upshifting and/or downshifting of an automatic transmission depending on engine load.

In order to accomplish the aforementioned and other objects of the present invention, a shift-shock reducing apparatus of a power train employing an engine and an automatic transmission, comprises a sensor that detects an engine load condition, an engine controller that executes engine-torque correction in a direction that cancels an inertia torque generated owing to a change in transmission input speed of the automatic transmission during a shift, for shift-shock reduction, and a transmission controller comprising a shift-speed correction circuit for compensating for a shift speed of the automatic transmission depending on engine load.

According to another aspect of the invention, a shift-shock reducing apparatus of a power train employing an engine and an automatic transmission, comprises sensor means for detecting an engine load condition, an engine controller comprising engine-torque correction means for executing engine-torque correction in a direction that cancels an inertia torque generated owing to a change in transmission input speed of the automatic transmission during a shift, for shift-shock reduction, and a transmission controller comprising shift-speed correction means for compensating for a shift speed of the automatic transmission depending on engine load.

According to a further aspect of the invention, a method of reducing shift shocks of a power train employing an engine and an automatic transmission, comprises detecting an engine load condition, executing engine-torque correction for canceling an inertia torque generated owing to a change in transmission input speed of the automatic transmission during a shift, for shift-shock reduction, and compensating for a shift speed of the automatic transmission depending on engine load.

According to a still further aspect of the invention, a method of reducing shift shocks of a power train employing an engine and an automatic transmission, comprises detecting an engine load condition, determining whether a shifting direction of the automatic transmission indicates upshifting or downshifting, determining an upshift time-constant correction factor based on engine load during upshifting, and calculating a corrected upshift time constant for compensating for an upshift speed depending on the engine load and for suppressing a positive inertia torque generated owing to a change in transmission input speed of the automatic transmission during upshifting, determining a downshift time-constant correction factor based on the engine load during downshifting, and calculating a corrected downshift time constant for compensating for a downshift speed depending on the engine load and for suppressing a negative inertia torque generated owing to a change in transmission input speed of the automatic transmission during downshifting, determining a target transmission ratio to bring an actual transmission ratio closer to the target transmission ratio at the compensated shift speed, which speed is determined based on the corrected upshift time constant during upshifting and determined based on the corrected downshift time constant during downshifting, and executing engine-torque correction for canceling the suppressed inertia torque, for shift-shock reduction.

The other objects and features of this invention will become understood from the following description with reference to the accompanying drawings.

**BRIEF DESCRIPTION OF THE DRAWINGS**

Fig. 1 is a system diagram illustrating an embodiment of a shift-shock reducing apparatus, which is applicable to a vehicular power train.
Fig. 2 is a flow chart showing a shift-shock reduction control main routine (with engine-load dependent shift-speed control) executed within a transmission controller incorporated in the shift-shock reducing apparatus of the embodiment.
Fig. 3A is a preprogrammed upshift time-constant correction factor Km map.
Fig. 3B is a preprogrammed downshift time-constant correction factor Km map.
Figs. 4A-4F are time charts obtained by the shift-shock reduction control shown in Fig. 2 during an upshift.
Figs. 5A-5F are time charts obtained by the shift-shock reduction control shown in Fig. 2 during a downshift.
Figs. 6A-6F are time charts obtained by a modified shift-shock reduction control routine.
Fig. 7 is a characteristic diagram showing variations in engine output torque Te.
Figs. 8A-8F are time charts explaining the operation and effects obtained by a general shift-shock reduction control (a general positive-inertia-torque cancellation control) with no engine-load dependent shift-speed control during an upshift.
Figs. 9A-9F are time charts explaining the operation and effects obtained by a general shift-shock reduction control (a general negative-inertia-torque cancellation control) with no engine-load dependent shift-speed control during a downshift.

**DESCRIPTION OF THE PREFERRED EMBODIMENTS**

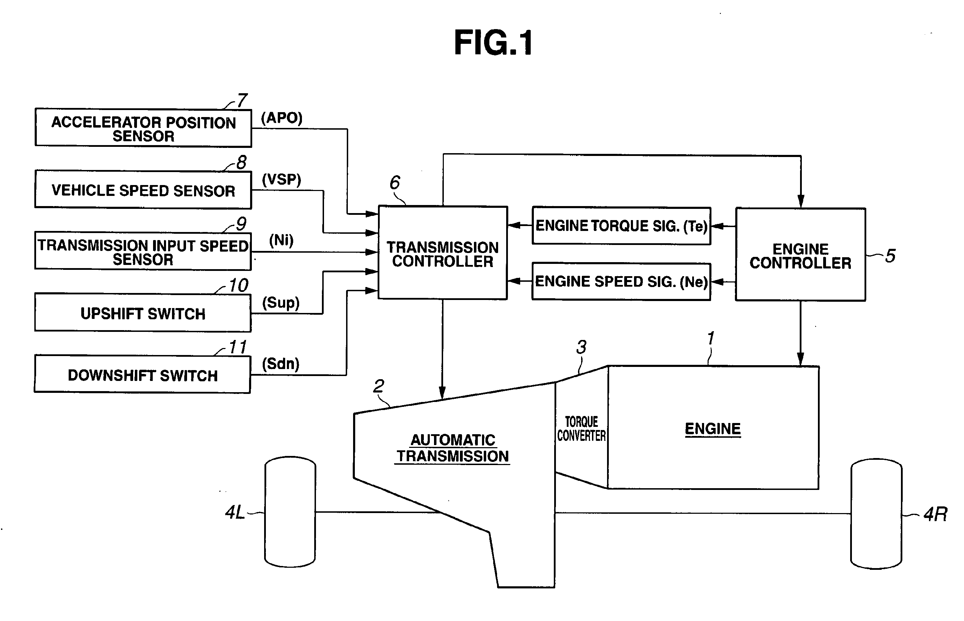

Referring now to the drawings, particularly to Fig. 1, the shift-shock reducing apparatus of the embodiment is exemplified in a power train of an automotive vehicle employing both an engine 1 and an automatic transaxle in which an automatic transmission 2 and a differential gear are combined with each other as a unit. As seen in Fig. 1, a coupling/uncoupling device 3 is disposed between engine 1 and automatic transmission 2 for performing coupling and uncoupling actions between the engine and the transmission. In the shown embodiment, a torque converter is used as coupling/uncoupling device 3, whereas a continuously variable transmission, abbreviated to "CVT", such as a belt-drive CVT or a toroidal CVT is used as automatic transmission 2. Instead of using such a CVT, a stepped automatic transmission, whose number of speeds is limited or finite, may be used. Front-left and front-right drive wheels 4L, 4R are fixedly connected to respective output axle-shafts of the transaxle (automatic transmission 2) via the differential gear.

Regarding the operation of shifting of automatic transmission 2, with a shift lever (not shown) shifted to and kept at an automatic shift column (that is, an automatic shift mode), an automatic shift is executed in such a manner as to automatically continuously vary a transmission ratio depending on a driving condition. In contrast, with the shift lever shifted to and kept at a manual shift column (that is, a manual shift mode), a manual shift is executed in such a manner as to upshift or downshift stepwise between respective two adjacent transmission ratios of five transmission ratios, namely, a first-speed equivalent transmission ratio (corresponding to a $1^{st}$-speed gear of the manual shift mode), a second-speed equivalent transmission ratio (corresponding to a $2^{nd}$-speed gear of the manual shift mode), a third-speed equivalent transmission ratio (corresponding to a $3^{rd}$-speed gear of the manual shift mode), a fourth-speed equivalent transmission ratio (corresponding to a $4^{th}$-speed gear of the manual shift mode) and a fifth-speed equivalent transmission ratio (corresponding to a $5^{th}$- speed gear of the manual shift mode), each time sliding movement (or shifting) of the shift lever from a neutral position (an ordinary position) to an upshift position or to a downshift position.

In the case of the power train shown in Fig. 1, power (driving torque) produced by engine 1 is input from coupling/uncoupling device 3 into automatic transmission 2. Then, the transmission input speed of automatic transmission 2 is varied depending on the selected transmission ratio. In other words, the transmission input torque is varied depending on the selected transmission ratio. The transmission output torque (the driving torque after shifting) is transferred via the differential gear to front-left and front-right drive wheels 4L-4R for vehicle propulsion.

Although it is not clearly shown in Fig. 1, engine 1 employs an electronically-controlled throttle valve installed in an intake pipe of an induction system. Basically, throttle opening TVO of the electronically-controlled throttle valve varies depending on an accelerator-pedal depression degree (an accelerator opening) APO. Actually, throttle opening TVO of the electronically-controlled throttle valve can be increased or decreased appropriately in response to a demand for engine power (torque) output control (i.e., a demand for shift-shock reduction), irrespective of the accelerator opening APO. Thus, a so-called torque-down (torque-decrease) compensation for engine torque or a so-called torque-up (torque-increase) compensation for engine torque can be achieved by decreasing or increasing throttle opening TVO. Within the engine 1, an air-fuel mixture of air of an intake-air flow rate properly controlled by the throttle valve and fuel sprayed by a fuel injector is spark-ignited by means of a spark plug to run the engine.

An engine controller 5 coordinates various engine control functions. For instance, engine controller 5 executes intake-and-exhaust valve lift characteristic control for each of intake and exhaust valves, valve open timing and valve closure timing control for effective compression ratio control, and the like. Additionally, engine controller 5 executes electronic throttle opening control for the electronically-controlled throttle valve, electronic fuel-injection control (or electronic fuel-supply rate control for an electronically-controlled injector of an electronic fuel-injection system), and electronic ignition timing control for a spark plug of an electronic ignition system. The central processing unit (CPU) of engine controller 5 is responsible for carrying the control program of each of the above-mentioned engine controls and is capable of performing necessary arithmetic and logic operations. Computational results (arithmetic calculation results), that is, calculated output signals are relayed through the output interface circuitry of engine controller 5 to output stages. A desired engine power output (target engine torque tTe) is also calculated or determined within engine controller 5, coordinating these engine control functions.

Engine torque control for shift-shock reduction can be achieved by utilizing engine torque control based on electronic throttle opening control, engine torque control based on electronic fuel-supply rate control, engine torque control based on electronic ignition timing control, engine torque control based on intake-and-exhaust valve lift characteristic control, and engine torque control based on effective compression ratio control, either alone or in any reasonable combination. For the purpose of simplification of the disclosure, in the control system of the embodiment, only the engine torque control based on throttle opening control will be assumed as an engine torque control for shift-shock reduction in the following discussion.

The operation of automatic transmission 2 is controlled by a transmission controller 6. Transmission controller 6 generally comprises a microcomputer. Transmission controller 6 includes an input/output interface (I/O), memories (RAM, ROM), and a microprocessor or a central processing unit (CPU). The input/output interface (I/O) of transmission controller 6 receives input informational data signals from engine controller 5 (regarding engine torque Te and engine speed Ne). The I/O of transmission controller 6 also receives input information from various engine/vehicle switches and sensors, namely an accelerator position sensor (an accelerator opening sensor) 7, a vehicle speed sensor 8, a transmission input speed sensor 9, an upshift switch 10, and a downshift switch 11. Accelerator position sensor 7 detects the accelerator-pedal depression degree (accelerator opening) APO. Vehicle speed sensor 8 detects vehicle speed VSP. Transmission input speed sensor 9 detects transmission input speed Ni (an actual transmission input speed). Upshift switch 10 is switched ON, each time the shift lever is manually shifted from the neutral position to the upshift position at the manual shift mode, so as to generate an upshift signal Sup. Downshift switch 11 is switched ON, each time the shift lever is manually shifted from the neutral position to the downshift position at the manual shift mode, so as to generate a downshift signal Sdn. Although it is not clearly shown in the drawings, a throttle position sensor is also provided for detecting throttle opening TVO (actual throttle opening) of the electronically-controlled throttle valve, and a transmission output speed sensor is also provided for detecting transmission output speed No (an actual transmission output speed). The actual transmission ratio is calculated as a ratio (Ni/No) of transmission input speed Ni to transmission output speed No. The transmission ratio may be estimated by a ratio of transmission input speed Ni to vehicle speed VSP (regarded as transmission output speed No).

In the automatic shift mode for automatic transmission 2, transmission controller 6 determines, based on the input information, a target transmission input speed of automatic transmission 2, from a predetermined shift map defining a preprogrammed shift sequence. Thereafter, transmission controller 6 executes automatic shift control for automatic transmission 2 such that the actual transmission input speed is brought closer to the target transmission input speed with a predetermined response (in other words, at a controlled time rate of change in transmission ratio or a controlled shift speed described later).

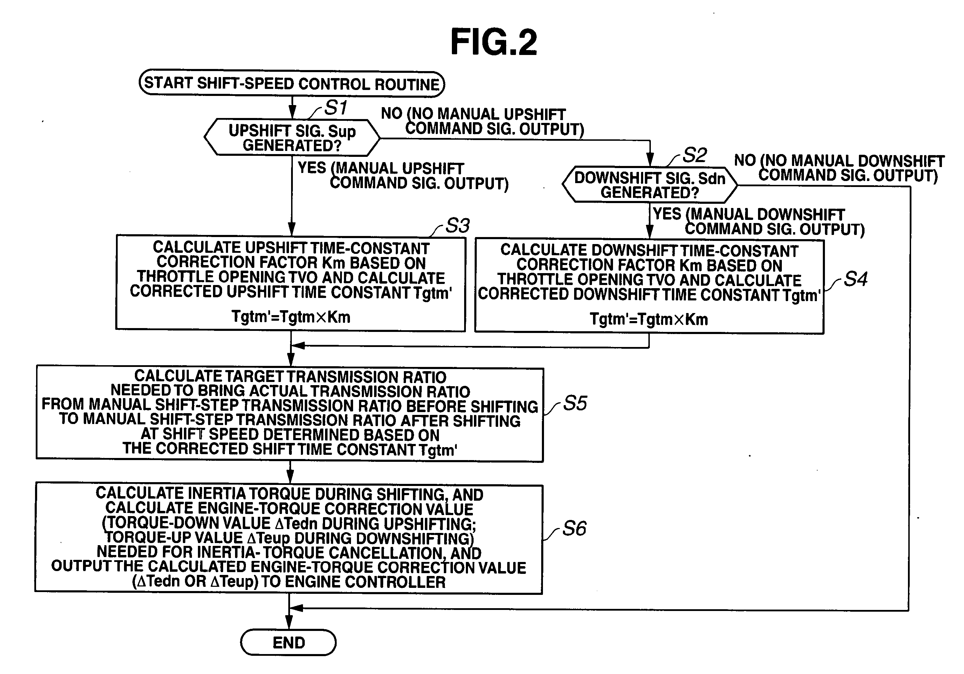

In the manual shift mode for automatic transmission 2, transmission controller 6 executes the control program (the shift-speed control routine) shown in Fig. 2. For the purpose of power-train (automatic-transmission) shift-shock reduction that the invention assumes an aim, a shift speed (that is, a speed for both upshifting and downshifting) is controlled as described hereunder in detail by reference to the flow chart of Fig. 2. Additionally, an engine-torque correction value (i.e., engine torque-down value ΔTedn or engine torque-up value ΔTeup) is determined as described hereunder by reference to the flow chart of Fig. 2, and then the determined engine-torque correction value (i.e., ΔTedn or ΔTeup) is output from transmission controller 6 to engine controller 5.

Referring now to Fig. 2, there is shown the shift-shock reduction control routine including or fully taking into account shift-speed control based on engine load (e.g., throttle opening TVO). The shift-shock reduction control routine shown in Fig. 2 is executed as time-triggered interrupt routines to be triggered every predetermined time intervals (every predetermined control cycles).

At step S1, a check is made to determine whether upshift signal Sup from upshift switch 10, that is, a manual upshift command, has been generated.

At step S2, a check is made to determine whether downshift signal Sdn from downshift switch 11, that is, a manual downshift command, has been generated.

When the answer to step S1 is in the negative (NO) and the answer to step S2 is in the negative (NO), that is, when there is no output of the manual upshift command and there is no output of the manual downshift command, it is determined that there is no necessity for shift-speed control and engine-torque correction, both executed for shift-shock reduction. Thus, one execution cycle of this routine terminates.

When the answer to step S1 is in the affirmative (YES), that is, in the presence of the output of the manual upshift command (Sup), the routine proceeds to step S3.

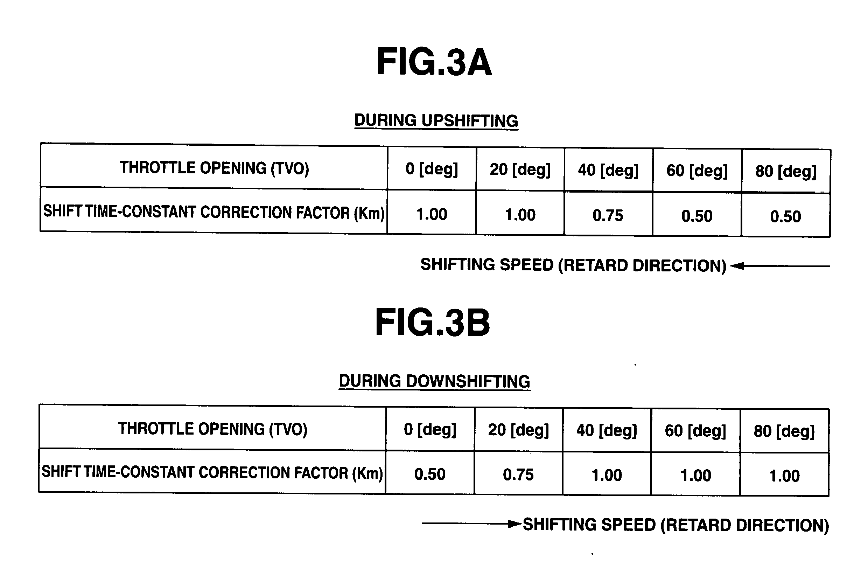

At step S3, an upshift time-constant correction factor Km for a shift time constant Tgtm, in other words, a correction factor of an upshift speed, is calculated or retrieved based on throttle opening TVO (regarded as engine load) from the preprogrammed upshift time-constant correction factor Km map shown in Fig. 3A. Thereafter, a corrected shift time constant Tgtm' (=Tgtm×Km) is arithmetically calculated by multiplying the shift time constant Tgtm with the upshift time-constant correction factor Km.

When the answer to step S2 is in the affirmative (YES), that is, in the presence of the output of the manual downshift command (Sdn), the routine proceeds to step S4.

At step S4, a downshift time-constant correction factor Km for shift time constant Tgtm, in other words, a correction factor of a downshift speed, is calculated or retrieved based on throttle opening TVO (regarded as engine load) from the preprogrammed downshift time-constant correction factor Km map shown in Fig. 3B. Thereafter, a corrected shift time constant Tgtm' (=Tgtm×Km) is arithmetically calculated by multiplying the shift time constant Tgtm with the downshift time-constant correction factor Km. As discussed above, steps S3-S4 function as a shift-speed correction circuit (shift-speed correction means). In the shown embodiment, to properly tune or appropriately balance shift-shock reduction levels in the upshifting direction and in the downshifting direction, the shift-speed correction circuit (i.e., S3-S4) varies a correction factor Km of the shift speed depending on whether the shifting direction of automatic transmission 2 indicates an upshift or a downshift. Note that the rate of decrease in the upshift time-constant correction factor (see Fig. 3A), gradually decreasing according to an increase in throttle opening TVO slightly differs from the rate of increase in the downshift time-constant correction factor (see Fig. 3B), gradually increasing according to an increase in throttle opening TVO.

The normal shift time constant Tgtm before corrected, is generally calculated from the following expres-

sion.

$$Tgtm=Tgtm(0)\times Ko\times Kv\times Ks$$

where Tgtm(0) denotes a basic time constant, Ko denotes a coefficient determined based on both the selected range and transmission ratio, Kv denotes a vehicle-speed coefficient determined based on vehicle speed VSP, and Ks denotes a special-condition coefficient determined depending on special conditions such as a low-temperature condition, repetitions of spinning and recovering, and the like.

The previously-noted upshift time-constant correction factor Km map of Fig. 3A and the downshift time-constant correction factor Km map of Fig. 3B, both needed for retrieving or deriving the corrected shift time constant Tgtm' (=TgtmxKm) by making a correction to the normal shift time constant Tgtm responsively to a signal indicative of throttle opening TVO, are preprogrammed or preset as follows.

That is, the upshift time-constant correction factor Km map of Fig. 3A and the downshift time-constant correction factor Km map of Fig. 3B are experimentally predetermined or assumed by the inventors of the present invention, so that a shift speed determined by the corrected shift time constant Tgtm' does not cause such problems as disclosed previously in reference to Figs. 8A-8F (during upshifting) and Figs. 9A-9F (during downshifting). In other words, these TVO-Km maps of Figs. 3A-3B are predetermined or preprogrammed so that each of time-constant correction factors Km ensures an upper limit of shift speeds (determined by the corrected shift time constant Tgtm') that never generate such an extreme inertia torque (a great inertia torque) that cannot be canceled by an engine torque-change margin. The engine torque-change margin is defined by an engine torque-increase margin (Temax-Te) between an actual engine torque Te based on latest up-to-date information about the engine load and the maximum engine torque value Temax and an engine torque-decrease margin (Te-Temin) between the actual engine torque Te and the minimum engine torque value Temin.

During an upshift, as previously described in reference to the characteristic diagram of Fig. 7, there is a problem of a lack of an engine torque-decrease margin (see the narrow margin B2 of Fig. 7) during engine torque-down correction to be executed as a countermeasure against an upshift shock. The lack of the engine torque-decrease margin becomes remarkable under low engine load operation (as throttle opening TVO becomes small). Thus, as seen in Fig. 3A, the upshift time-constant correction factor Km is preset or preprogrammed to increase, as throttle opening TVO decreases. By virtue of the proper upshift-period TVO-Km characteristic map of Fig. 3A, the upshift speed is corrected so as to reduce by increasing the corrected upshift time constant Tgtm'

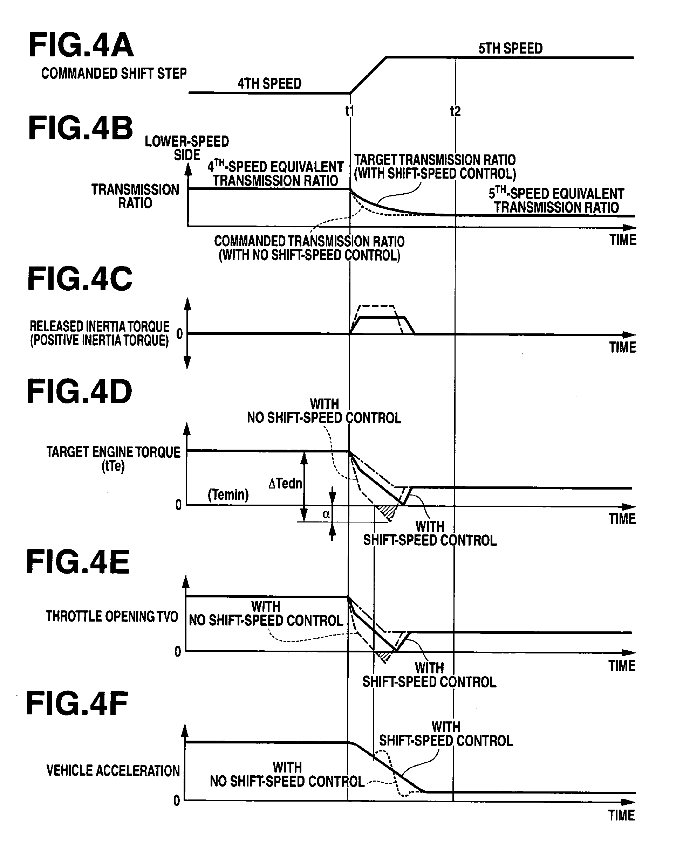

(=TgtmxKm), as throttle opening TVO decreases. The reduced upshift speed means slow upshifting. This contributes to the reduced positive inertia torque, i.e., the suppressed inertia torque release, as described later in reference to Fig. 4C.

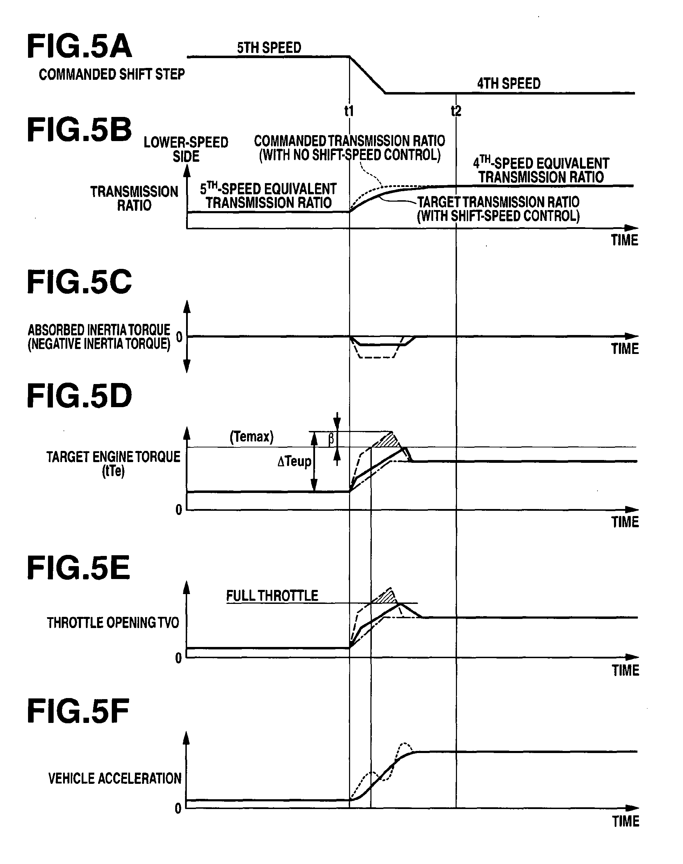

In contrast, during a downshift, as previously described in reference to the characteristic diagram of Fig. 7, there is a problem of a lack of an engine torque-increase margin (see the narrow margin A1 of Fig. 7) during engine torque-up correction to be executed as a countermeasure against a downshift shock. The lack of the engine torque-increase margin becomes remarkable under high engine load operation (as throttle opening TVO becomes large). Thus, as seen in Fig. 3B, the downshift time-constant correction factor Km is preset or preprogrammed to increase, as throttle opening TVO increases. By virtue of the proper downshift-period TVO-Km characteristic map of Fig. 3B, the downshift speed is corrected so as to reduce by increasing the corrected downshift time constant Tgtm' (=Tgtm×Km), as throttle opening TVO increases. The reduced downshift speed means slow downshifting. This contributes to the reduced negative inertia torque, i.e., the suppressed inertia torque absorption, as described later in reference to Fig. 5C.

As previously described, time-constant correction factors Km shown in Figs. 3A-3B are predetermined or preprogrammed so that each of time-constant correction factors Km ensures an upper limit of shift speeds (determined by the corrected shift time constant Tgtm') that never generate such an extreme inertia torque that cannot be canceled by an engine torque-change margin. It will be appreciated that the invention is not limited to the previously-discussed particular settings of time-constant correction factors Km ensuring the upper shift-speed limit, which generates such an inertia torque that can be just canceled by the engine torque-change margin, but that various changes and modifications may be made. For instance, to balance two contradictory requirements, that is, reduced shift shocks and quick shifting speed, and thus to obtain advantageous trade-off between shift shock and shift response, the shift response may be somewhat enhanced or improved, while leaving a slight permissible shift shock. That is, when a seasoning (a tuning) of an enhanced shift response is required even if there are some shift shocks, time-constant correction factors Km may be preset or preprogrammed to ensure a shift speed, which generates such a middle inertia torque that cannot be fully canceled by the engine torque-change margin.

After the corrected upshift time constant Tgtm' (=Tgtm×Km) has been determined or calculated through step S3 (during an upshift) or after the corrected downshift time constant Tgtm' (=Tgtm×Km) has been determined or calculated through step S4 (during a downshift), the routine proceeds to step S5.

At step S5, a target transmission ratio is calculated every predetermined time intervals, so that the actual transmission ratio (Ni/No) is adjusted or controlled from a manual shift-step transmission ratio before shifting to a manual shift-step transmission ratio after shifting at a properly controlled shift speed determined based on the corrected shift time constant Tgtm'. The calculated target transmission ratios are sequentially relayed or commanded through the output interface of transmission controller 6 to the shift actuator (not shown) incorporated in automatic transmission 2. Thus, shift control is executed so that the actual transmission ratio of automatic transmission 2 is brought closer to the manual shift-step transmission ratio after shifting at the shift speed determined based on the corrected shift time constant Tgtm'. After step S5, step 6 occurs.

At step S6, a shifting-period inertia torque of automatic transmission 2 automatically shifted as set forth above, is arithmetically calculated by multiplying a time rate of change in transmission input speed Ni during shifting with moments of inertia of rotating masses of the power train. Thereafter, on the basis of the calculated shifting-period inertia torque, an engine-torque correction value (i.e., engine torque-down value $\Delta Tedn$ during an upshift or engine torque-up value $\Delta Teup$ during a downshift), required to cancel the calculated shifting-period inertia torque, is calculated. The calculated engine-torque correction value (i.e., $\Delta Tedn$ or $\Delta Teup$) is relayed or outputted through the output interface of transmission controller 6 to engine controller 5.

The input interface of engine controller 5 receives input information regarding the calculated engine-torque correction value (i.e., engine torque-down value $\Delta Tedn$ during an upshift or engine torque-up value $\Delta Teup$ during a downshift), required to reduce shift shocks by canceling the shifting-period inertia torque. And then, by way of throttle opening control of engine 1, based on the target engine torque tTe reflecting the calculated engine-torque correction value (i.e., $\Delta Tedn$ during an upshift or $\Delta Teup$ during a downshift), engine controller 5 achieves engine torque correction, thus reducing shift shocks.

The operation and effects obtained by the shift-shock reducing apparatus of the embodiment during upshifting are hereunder described in detail in reference to the time charts of Figs. 4A-4F.

Hitherto, as previously explained in reference to Figs. 8A-8F (during an upshift), shift-speed control based on engine load (e.g., throttle opening TVO) was not taken into account. According to the shift-shock reduction control system of the embodiment, as can be seen from the time charts of Figs. 4A-4F, shift-shock reduction control is performed, while fully taking into account the shift-speed control based on engine load. In a similar manner to Figs. 8A-8F (during shift-shock reduction control or engine torque correction with no engine-load dependent shift-speed control), in Figs. 4A-4F (during shift-shock reduction control, that is, during engine torque correction combined with shift-speed control), suppose that a transmission-ratio command indicative of a target transmission ratio is generated in response to an output of a 4→5 upshift command at the time t1 of Fig. 4A, and that the 4→5 upshift has been completed at the time t2.

Hitherto, the transmission-ratio command was generated as indicated by the broken line in Fig. 4B, which broken line is identical to the characteristic curve indicated by the broken line in Fig. 8B. And thus, as previously described, the positive inertia torque (the remarkable inertia torque release occurring owing to the transmission input speed fall during upshifting) becomes great (see the trapezoidal broken line in Fig. 4C, identical to the trapezoidal solid line in Fig. 8C). Therefore, target engine torque tTe, indicated by the broken line in Fig. 4D (identical to the broken line in Fig. 8D), is generally set to directly reflect engine torque-down value $\Delta Tedn$, required for reducing a shift shock by canceling the positive inertia torque. To realize the calculated target engine torque tTe indicated by the broken line in Fig. 4D and directly reflecting engine torque-down value $\Delta Tedn$, throttle opening TVO should be set or controlled as indicated by the broken line in Fig. 4E (identical to the broken line in Fig. 8E). However, the hatched area (the right-hand diagonal shading area) in Fig. 4E indicates a minus throttle opening less than zero. As a matter of course, it is impossible to set the throttle opening TVO to a negative throttle opening. That is, it is impossible to set the actual engine torque Te to the target engine torque tTe less than the minimum engine torque value Temin. This results in a lack of torque-down action, as indicated by the letter "α" in Fig. 4D, and whereby it is impossible to completely cancel the comparatively great positive inertia torque (the great inertia torque release) indicated by the trapezoidal broken line in Fig. 4C. In other words, the still existing positive inertia torque disturbs a shift shock from being reduced to below a desired shock-reduction rate. As can be seen from the time rate of change in vehicle acceleration indicated by the broken line in Fig. 4F, the still existing positive inertia torque causes positive and negative fluctuations in longitudinal acceleration of the vehicle, that is, remarkable longitudinal shift shocks.

In contrast, according to the control system of the embodiment, through step S3, upshift time-constant correction factor Km for shift time constant Tgtm, needed to determine the time rate of change (i.e., upshift speed) in the transmission-ratio command (the target transmission ratio as indicated by the broken line in Fig. 4B identical to the broken line in Fig. 8B), is calculated or retrieved based on throttle opening TVO (regarded as engine load) from the preprogrammed upshift time-constant correction factor Km map shown in Fig. 3A. By way of multiplication of shift time constant Tgtm with upshift time-constant correction factor Km, the corrected upshift time constant Tgtm' ($=Tgtm \times Km$) is arithmetically calculated. The upshifting speed determined by the corrected upshift time constant Tgtm' does not cause such problems as disclosed previously in reference to Figs. 8A-8F (during upshifting). That is, the upshifting speed determined by the corrected upshift time constant Tgtm' can be set or tuned or controlled in such a manner as to ensure an upper limit (see the characteristic curve indicative of the time rate of change in target transmission ratio indicated by the solid line in Fig. 4B) of shift speeds that never generate such a great positive inertia torque (i.e., a great inertia torque release) that cannot be canceled by the engine torque-decrease margin, thereby ensuring a middle magnitude of released inertia torque (indicated by the trapezoidal solid line in Fig. 4C). Note that, in Fig. 4B, the characteristic curve indicative of the time rate of change (i.e., upshift speed) in target transmission ratio indicated by the solid line (with shift-speed control) is comparatively moderate as compared to that indicated by the broken line (with no shift-speed control). The released inertia torque (the positive inertia torque), occurring owing to a transmission input speed fall during upshifting at the previously-discussed appropriately controlled slow upshifting speed, tends to be properly suppressed or reduced (see the middle magnitude of inertia torque release indicated by the trapezoidal solid line in Fig. 4C) due to this slow upshifting speed. The engine torque-down value, required for reducing a shift shock by canceling the released inertia torque (the positive inertia torque), has only to be set to a small value (=ΔTedn-α), obtained by subtracting the value "α" from the usual engine torque-down value ΔTedn. Target engine torque tTe, directly reflecting the calculated engine torque-down value (ΔTedn-α), is set as indicated by the solid line in Fig. 4D, and then, to realize the calculated target engine torque tTe indicated by the solid line in Fig. 4D and directly reflecting the calculated engine torque-down value (ΔTedn-α), throttle opening TVO is controlled as indicated by the solid line in Fig. 4E. As set forth above, there is no possibility that target engine torque tTe is set to a value less than the minimum engine torque value Temin. That is, by way of the proper setting of the perfectly achievable target engine torque tTe, in other words, by way of satisfactory approach of the actual engine torque to the target engine torque, it is possible to completely cancel the released inertia torque. This eliminates or avoids such a drawback that it is impossible to aimfully cancel shift shocks due to the still existing positive inertia torque. As can be seen from the time rate of change in vehicle acceleration (in particular, longitudinal G) indicated by the solid line in Fig. 4F, there are less positive and negative fluctuations in longitudinal acceleration of the vehicle, that is, less longitudinal shift shocks.

The operation and effects obtained by the shift-shock reducing apparatus of the embodiment during downshifting are hereunder described in detail in reference to the time charts of Figs. 5A-5F.

Hitherto, as previously explained in reference to Figs. 9A-9F (during a downshift), shift-speed control based on engine load (e.g., throttle opening TVO) was not taken into account. According to the shift-shock reduction control system of the embodiment, as can be seen from the time charts of Figs. 5A-5F, shift-shock reduction control is performed, while fully taking into account the shift-speed control based on engine load. In a similar manner to Figs. 9A-9F (during shift-shock reduction control or engine torque correction with no engine-load dependent shift-speed control), in Figs. 5A-5F (during shift-shock reduction control, that is, during engine torque correction combined with shift-speed control), suppose that a transmission-ratio command indicative of a target transmission ratio is generated in response to an output of a 5→4 downshift command at the time t1 of Fig. 5A, and that the 5→4 downshift has been completed at the time t2.

Hitherto, the transmission-ratio command was generated as indicated by the broken line in Fig. 5B, which broken line is identical to the characteristic curve indicated by the broken line in Fig. 9B. And thus, as previously described, the negative inertia torque (the remarkable inertia torque absorption occurring owing to the transmission input speed rise during downshifting) becomes great (see the trapezoidal broken line in Fig. 5C, identical to the trapezoidal solid line in Fig. 9C). Therefore, target engine torque tTe, indicated by the broken line in Fig. 5D (identical to the broken line in Fig. 9D), is generally set to directly reflect engine torque-up value ΔTeup, required for reducing a shift shock by canceling the negative inertia torque. To realize the calculated target engine torque tTe indicated by the broken line in Fig. 5D and directly reflecting engine torque-up value ΔTeup, throttle opening TVO should be set or controlled as indicated by the broken line in Fig. 5E (identical to the broken line in Fig. 9E). However, the hatched area (the right-hand diagonal shading area) in Fig. 5E indicates an impossible throttle opening exceeding a full throttle (a maximum throttle opening). As a matter of course, it is impossible to set throttle opening TVO to the impossible throttle opening exceeding a full throttle. That is, it is impossible to set the actual engine torque Te to the target engine torque tTe exceeding the maximum engine torque value Temax. This results in a lack of torque-up action, as indicated by the letter "β" in Fig. 5D, and whereby it is impossible to completely cancel the comparatively great negative inertia torque (the great inertia torque absorption) indicated by the trapezoidal broken line in Fig. 5C. In other words, the still existing negative inertia torque disturbs a shift shock from being reduced to below a desired shock-reduction rate. As can be seen from the time rate of change in vehicle acceleration indicated by the broken line in Fig. 5F, the still existing negative inertia torque causes positive and negative fluctuations in longitudinal acceleration of the vehicle, that is, remarkable longitudinal shift shocks.

In contrast, according to the control system of the embodiment, through step S4, downshift time-constant correction factor Km for shift time constant Tgtm, needed to determine the time rate of change (i.e., downshift speed) in the transmission-ratio command (the target transmission ratio as indicated by the broken line in Fig. 5B identical to the broken line in Fig. 9B), is calculated or retrieved based on throttle opening TVO (regarded as engine load) from the preprogrammed downshift time-constant correction factor Km map shown in Fig. 3B. By way of multiplication of shift time constant Tgtm with downshift time-constant correction factor Km, the corrected downshift time constant Tgtm' (=Tgtm×Km) is arithmetically calculated. The downshifting speed determined by the corrected downshift time constant Tgtm' does not cause such problems as disclosed previously in reference to Figs. 9A-9F (during downshifting). That is, the downshifting speed determined by the corrected downshift time constant Tgtm' can be set or tuned or controlled in such a manner as to ensure an upper limit (see the characteristic curve indicative of the time rate of change in target transmission ratio indicated by the solid line in Fig. 5B) of shift speeds that never generate such a great negative inertia torque (i.e., a great inertia torque absorption) that cannot be canceled by the engine torque-increase margin, thereby ensuring a middle magnitude of absorbed inertia torque (indicated by the trapezoidal solid line in Fig. 5C). Note that, in Fig. 5B, the characteristic curve indicative of the time rate of change (i.e., downshift speed) in target transmission ratio indicated by the solid line (with shift-speed control) is comparatively moderate as compared to that indicated by the broken line (with no shift-speed control). The absorbed inertia torque (the negative inertia torque), occurring owing to a transmission input speed rise during downshifting at the previously-discussed appropriately controlled slow downshifting speed, tends to be properly suppressed or reduced (see the middle magnitude of inertia torque absorption indicated by the trapezoidal solid line in Fig. 5C) due to this slow downshifting speed. The engine torque-up value, required for reducing a shift shock by canceling the absorbed inertia torque (the negative inertia torque), has only to be set to a small value (=ΔTeup-β), obtained by subtracting the value "β" from the usual engine torque-up value ΔTeup. Target engine torque tTe, directly reflecting the calculated engine torque-up value (ΔTeup-β), is set as indicated by the solid line in Fig. 5D, and then, to realize the calculated target engine torque tTe indicated by the solid line in Fig. 5D and directly reflecting the calculated engine torque-up value (ΔTeup-β), throttle opening TVO is controlled as indicated by the solid line in Fig. 5E. As set forth above, there is no possibility that target engine torque tTe is set to a value greater than the maximum engine torque value Temax. That is, by way of the proper setting of the perfectly achievable target engine torque tTe, in other words, by way of satisfactory approach of the actual engine torque to the target engine torque, it is possible to completely cancel the absorbed inertia torque. This eliminates or avoids such a drawback that it is impossible to aimfully cancel shift shocks due to the still existing negative inertia torque. As can be seen from the time rate of change in vehicle acceleration (in particular, longitudinal G) indicated by the solid line in Fig. 5F, there are less positive and negative fluctuations in longitudinal acceleration of the vehicle, that is, less longitudinal shift shocks.

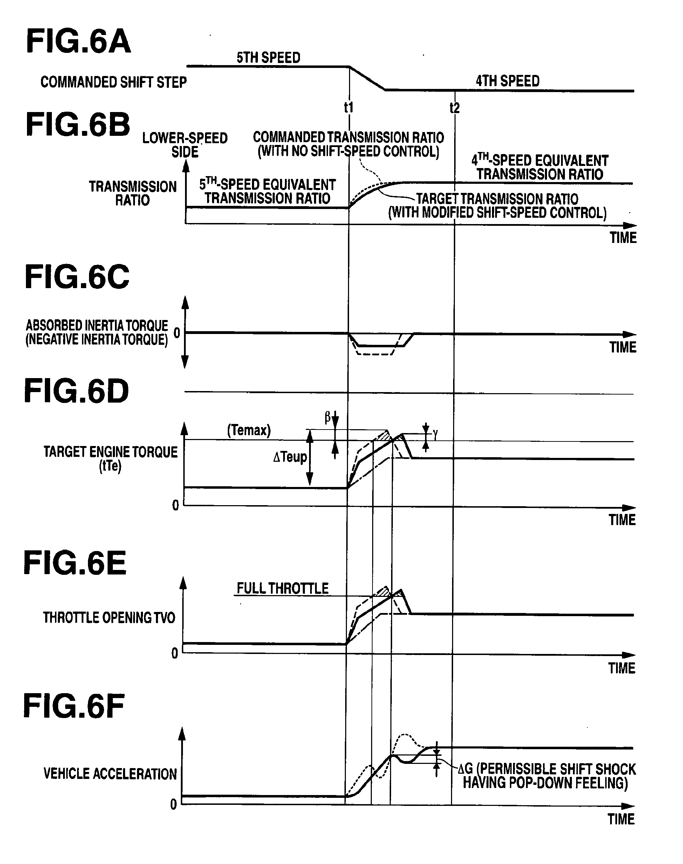

In the control system of the embodiment as previously described, in order to put a higher priority on a shift-shock reducing effect rather than a shift response, time-constant correction factors Km shown in Figs. 3A-3B are predetermined or preprogrammed so that each of time-constant correction factors Km ensures an upper limit of shift speeds (determined by the corrected shift time constant Tgtm') that never generate such an extreme inertia torque that cannot be canceled by an engine torque-change margin. It will be appreciated that the invention is not limited to the previously-discussed particular settings of time-constant correction factors Km ensuring the upper shift-speed limit, which generates such an inertia torque that can be just canceled by the engine torque-change margin, but that various changes and modifications may be made. For instance, in order to meet a downshift that often requires quick shifting action, as hereunder described in detail in reference to the time charts of Figs. 6A-6F, the control characteristics and performance of the shift-shock reduction control system may be tuned or designed to provide such a combined seasoning of shift-shock reduction and shift-speed control that enables a fast shift speed, while leaving a slight permissible shift shock.

Referring now to Figs. 6A-6F, there are shown the time charts obtained by the modified shift-shock reduction control routine during downshifting. The modified shift-shock reduction control system executing the modified shift-shock reduction routine (the modified engine-load dependent shift-speed control), slightly differs from the control system executing the shift-shock reduction routine of Fig. 2, in that downshift time-constant correction factors Km of the TVO-Km map of Fig. 3B are all preset to smaller values, for example, Km: a value of less than 0.50 at zero throttle opening TVO, Km: a value of less than 0.75 at throttle opening TVO of 20 degrees, and Km: a value of less than 1.00 at throttle opening TVO ranging from 40 degrees to 80 degrees, to ensure a faster shifting speed while generating a permissible downshift shock, and consequently to improve the shift response, paying a slight sacrifice to a shift-shock reducing effect. For the reasons discussed above, in the modified shift-shock reduction control system, downshift time-constant correction factors Km of the TVO-Km map of Fig. 3B, used for map-retrieval of downshift time-constant correction factor Km in step S4 of Fig. 2, are somewhat modified to smaller values. As a result, the corrected downshift time constant Tgtm' (=Tgtm×Km), determined through step S4 of Fig. 2, can be also set to a smaller value, thus enabling a faster shifting speed during downshifting in the modified control system.

By way of the modified setting of downshift time-constant correction factor Km, in other words, by way of the modified setting of the corrected downshift time constant Tgtm' (=Tgtm×Km) to the smaller value, as can be seen from the 5→4 downshift characteristic curve indicated by the solid line in Fig. 6B, the target transmission ratio can be controlled or adjusted from a fifth-speed gear to a fourth-speed gear at a higher time rate of change (that is, at a faster downshift speed) in comparison with the 5→4 downshift characteristic curve indicated by the solid line in Fig. 5B. In other words, the target transmission ratio indicated by the solid line in Fig. 6B rises quickly when compared to the moderate characteristic curve of Fig. 5B.

The absorbed inertia torque (i.e., the negative inertia torque indicated by the solid line in Fig. 6C), arising from a transmission input speed rise occurring owing to downshifting at the higher shift speed, tends to become somewhat greater than that of Fig. 5C. In the modified control system, the engine torque-up value, required for reducing a shift shock by canceling the absorbed inertia torque (the negative inertia torque), is obtained as a computed value ($\Delta$Teup-$\beta$+$\gamma$) by adding a predetermined absorbed inertia-torque increment "$\gamma$" (substantially corresponding to a permissible shift shock $\Delta$G described later) to the subtracted value ($\Delta$Teup-$\beta$) obtained by subtracting the value "$\beta$" from the usual engine torque-up value $\Delta$Teup.

Generally, target engine torque tTe, directly reflecting the computed value ($\Delta$Teup-$\beta$+$\gamma$), is set as indicated by the solid line in Fig. 6D, and thereafter, to realize the calculated target engine torque tTe indicated by the solid line in Fig. 6D and directly reflecting the computed value ($\Delta$Teup-$\beta$+$\gamma$), throttle opening TVO should be set or controlled as indicated by the solid line in Fig. 6E. However, it is impossible to set or control throttle opening TVO to an impossible throttle opening exceeding a full throttle (wide open throttle "WOT"). Actually, the throttle opening hits the uppermost limit under a condition TVO=WOT (full throttle). Thus, regardless of the impossible target engine torque tTe indicated by the solid line in Fig. 6D and exceeding maximum engine output torque value Temax, the actual engine torque never exceeds the maximum engine torque value Temax, but hits the uppermost limit when the actual engine torque reaches the maximum engine output torque value Temax, thereby resulting in a lack "$\gamma$" in engine torque-up action. Thus, it is impossible to satisfactorily cancel all of the absorbed inertia torque (negative inertia torque) indicated by the solid line in Fig. 6C. As a result, owing to the still existing negative inertia torque, i.e., still existing inertia torque absorption (owing to the lack "$\gamma$" in engine torque-up action), as can be seen from the slight positive and negative fluctuations in vehicle acceleration (in the longitudinal direction of the vehicle) indicated by the solid line in Fig. 6F, a slight downshift shock $\Delta$G having a pop-down feeling of the engine torque is generated.

In setting downshift time-constant correction factors Km of the TVO-Km map, used for map-retrieval of downshift time-constant correction factor Km in the modified control system, related to Figs. 6A-6F, each of downshift time-constant correction factors Km determined based on throttle opening TVO is preset to such a smaller value that the generated downshift shock $\Delta$G having a pop-down feeling can be managed or suppressed within a predetermined vehicle-occupant's permissible shift-shock range. That is, by way of the proper setting of downshift time-constant correction factors Km of the TVO-Km map, used for map-retrieval of downshift time-constant correction factor Km in the modified control system, related to Figs. 6A-6F, to smaller values, the generated downshift shock $\Delta$G having a pop-down feeling is very small and negligible. Thus, the corrected downshift time constant Tgtm' can be also reduced, and therefore the downshifting speed can be controlled to an appropriately fast speed in a manner so as to match or satisfy a demand for downshifting.

On the other hand, during an upshift, in a similar manner to the system of the embodiment, in the modified control system, upshift time-constant correction factors Km are preset as shown in the TVO-Km map of Fig. 3A.

That is, in both of the control system of the embodiment and the modified control system, during an upshift, in order to appropriately reduce an upshift speed, upshift time-constant correction factors Km are preset such that upshift time-constant correction factor Km increases, as throttle opening TVO decreases, and that the corrected upshift time constant Tgtm' increases, as throttle opening TVO decreases. And thus, it is possible to certainly achieve satisfactory operation and effects (that is, shift-shock reducing effects) over the entire range of engine load, in such a manner to perfectly match a tendency that the problem of a lack of engine torque-down action to be executed as a countermeasure against an upshift shock (see a lack of engine torque-decrease margin B2 shown in Fig. 7), becomes remarkable, as engine load (such as throttle opening TVO) becomes low.

Additionally, in both of the control system of the embodiment and the modified control system, during a downshift, in order to appropriately reduce a downshift speed, downshift time-constant correction factors Km are preset such that downshift time-constant correction factor Km increases, as throttle opening TVO increases, and that the corrected downshift time constant Tgtm' increases, as throttle opening TVO increases. And thus, it is possible to certainly achieve satisfactory operation and effects (that is, shift-shock reducing effects) over the entire range of engine load, in such a manner to perfectly match a tendency that the problem of a lack of engine torque-up action to be executed as a countermeasure against a downshift shock (see a lack of engine torque-increase margin A1 shown in Fig. 7), becomes remarkable, as engine load (such as throttle opening TVO) becomes high.

As will be appreciated from the above, according to the shift-shock reducing apparatus of the power train of the shown embodiment, the shift speed of the automatic transmission can be appropriately compensated for depending on engine load. Thus, it is possible to compensate for or adjust the shift speed to an appropriate value in real time, while fully taking into account a maximum possible engine torque-change margin (that is, a maximum possible engine torque-down value $\Delta$Tednmax or a maximum possible engine torque-up value $\Delta$Teup-

max) of each and every engine load. By virtue of shift-speed control and engine-torque correction, both executed for shift-shock reduction, it is possible to effectively avoid such a drawback that it is impossible or difficult to aimfully cancel shift shocks due to a lack of the engine torque-change margin.

In the shown embodiment, only the engine torque control based on throttle opening control is exemplified as an engine torque control for shift-shock reduction. Instead of using only the throttle opening control, it will be appreciated that engine torque control for shift-shock reduction may be achieved by utilizing engine torque control based on electronic throttle opening control, engine torque control based on electronic fuel-supply rate control, engine torque control based on electronic ignition timing control, engine torque control based on intake-and-exhaust valve lift characteristic control, and engine torque control based on effective compression ratio control, either alone or in any reasonable combination. Each of fuel-supply rate control, ignition timing control, intake-and-exhaust valve lift characteristic control, and effective compression ratio control is superior to throttle opening control, in the control responsiveness.

In the maps of Figs. 3A-3B, as a parameter representative of engine load, throttle opening TVO is used. In lieu thereof, engine load may be estimated or derived from a combination of throttle opening TVO and engine speed Ne. Alternatively, engine load may be computed or estimated or derived from parameters such as the accelerator opening APO, boost pressure, fuel-injection quantity (i.e., a fuel-injection pulse width), intake-air quantity, and an estimated value of engine torque, either alone or in any reasonable combination.

In the shown embodiment, a shift speed for both upshifting and downshifting is compensated for depending on the magnitude of engine load (e.g., throttle opening TVO). A shift speed may be corrected only during either one of downshifting and upshifting, for shift-shock reduction.

The inventive concept of the improved shift-shock reducing apparatus is explained or exemplified in a 4→5 upshift and a 5→4 downshift within the continuously variable transmission (automatic transmission 2) operated at the manual shift mode. It will be understood that, for the purpose of ensuring improved shift-shock reduction, the inventive concept of the improved shift-shock reducing apparatus may be applied to such a situation that the continuously variable transmission 2 has to be automatically shifted in a manner so as to greatly vary a transmission ratio due to a great magnitude of accelerator-pedal depression.

Also, in the shown embodiment, automatic transmission 2 is constructed by a continuously variable transmission such as a belt-drive CVT or a toroidal CVT. As can be appreciated from the above, the inventive concept of the shift-shock reducing apparatus can be applied to a control system employing a stepped automatic transmission, whose number of speeds is limited or finite, instead of using a CVT.

The entire contents of Japanese Patent Application No. 2006-159698 (filed June 8, 2006) are incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A shift-shock reducing apparatus of a power train employing an engine (1) and an automatic transmission (2), comprising:

   a sensor that detects an engine load condition (TVO);
   an engine controller (5) that executes engine-torque correction in a direction that cancels an inertia torque generated owing to a change in transmission input speed (Ni) of the automatic transmission (2) during a shift, for shift-shock reduction; and
   a transmission controller (6) comprising a shift-speed correction circuit (S3-S4) for compensating for a shift speed of the automatic transmission (2) depending on engine load (TVO).

2. The shift-shock reducing apparatus as claimed in claim 1, wherein:

   when a shifting direction of the automatic transmission (2) is an upshifting direction, the shift-speed correction circuit (S3) compensates for the shift speed in a manner so as to increase the shift speed, as the engine load (TVO) increases; and
   when the shifting direction of the automatic transmission (2) is a downshifting direction, the shift-speed correction circuit (S4) compensates for the shift speed in a manner so as to decrease the shift speed, as the engine load (TVO) increases.

3. The shift-shock reducing apparatus as claimed in claims 1 or 2, wherein:

   the shift-speed correction circuit (S3-S4) compensates for the shift speed in a manner so as to adjust the generated inertia torque to below an inertia torque value that can be cancelled by an engine torque-change margin (Temax-Te, Te-Temin) defined by an engine torque-increase margin (Temax-Te) between a maximum engine torque value (Temax) and an actual engine torque (Te) determined based on latest up-to-date information about the engine load (TVO) and an engine torque-decrease margin (Te-Temin) between a minimum engine torque value (Temin) and the actual engine torque (Te).

4. The shift-shock reducing apparatus as claimed in claims 1 or 2, wherein:

the shift-speed correction circuit (S3-S4) varies a correction factor (Km) of the shift speed depending on whether the shifting direction of the automatic transmission (2) is the upshifting direction or the downshifting direction.

5. The shift-shock reducing apparatus as claimed in claim 4, wherein:

when the shifting direction of the automatic transmission (2) is the upshifting direction, the shift-speed correction circuit (S3) compensates for the shift speed in a manner so as to adjust the generated inertia torque to below an inertia torque value that can be cancelled by an engine torque-decrease margin (Te-Temin) between a minimum engine torque value (Temin) and an actual engine torque (Te) determined based on latest up-to-date information about the engine load; and

when the shifting direction of the automatic transmission (2) is the downshifting direction, the shift-speed correction circuit (S4) compensates for the shift speed in a manner so as to adjust the generated inertia torque to a specified torque value, the specified torque value exceeding an inertia torque value that can be cancelled by an engine torque-increase margin (Temax-Te) between a maximum engine torque value (Temax) and the actual engine torque (Te), but causing a permissible downshift shock ($\Delta G$) suppressed within a predetermined vehicle-occupant's permissible shift-shock range.

6. A method of reducing shift shocks of a power train employing an engine (1) and an automatic transmission (2), comprising:

detecting an engine load condition (TVO);
executing engine-torque correction for canceling an inertia torque generated owing to a change in transmission input speed (Ni) of the automatic transmission (2) during a shift, for shift-shock reduction; and
compensating for a shift speed of the automatic transmission (2) depending on engine load (TVO).

7. A method of reducing shift shocks of a power train employing an engine (1) and an automatic transmission (2), comprising:

detecting an engine load condition (TVO);
determining whether a shifting direction of the automatic transmission (2) indicates upshifting or downshifting;
determining an upshift time-constant correction factor (Km) based on engine load (TVO) during upshifting, and calculating a corrected upshift time constant (Tgtm'=Tgtm$\times$Km) for compensating for an upshift speed depending on the engine load (TVO) and for suppressing a positive inertia torque generated owing to a change in transmission input speed (Ni) of the automatic transmission (2) during upshifting;
determining a downshift time-constant correction factor (Km) based on the engine load (TVO) during downshifting, and calculating a corrected downshift time constant (Tgtm'=Tgtm$\times$Km) for compensating for a downshift speed depending on the engine load (TVO) and for suppressing a negative inertia torque generated owing to a change in transmission input speed (Ni) of the automatic transmission (2) during downshifting;
determining a target transmission ratio to bring an actual transmission ratio closer to the target transmission ratio at the compensated shift speed, which speed is determined based on the corrected upshift time constant (Tgtm'=Tgtm$\times$Km) during upshifting and determined based on the corrected downshift time constant (Tgtm'=TgtmxKm) during downshifting; and
executing engine-torque correction for canceling the suppressed inertia torque, for shift-shock reduction.

8. The method as claimed in claim 7, wherein:

when the shifting direction is the upshifting direction, the upshift time-constant correction factor (Km) decreases, as the engine load (TVO) increases; and
when the shifting direction is the downshifting direction, the downshift time-constant correction factor (Km) increases, as the engine load (TVO) increases.

9. The method as claimed in claim 8, wherein:

a rate of decrease in the upshift time-constant correction factor (Km), decreasing according to an increase in the engine load (TVO) differs from a rate of increase in the downshift time-constant correction factor (Km), increasing according to an increase in the engine load (TVO).

**10.** The method as claimed in claim 9, wherein:

the upshift time-constant correction factor (Km) is predetermined to ensure an upper limit of slow upshift speeds that adjusts the generated positive inertia torque to below an inertia torque value that can be cancelled by an engine torque-decrease margin (Te-Temin) between a minimum engine torque value (Temin) and an actual engine torque (Te) determined based on latest up-to-date information about the engine load; and

the downshift time-constant correction factor (Km) is predetermined to ensure an upper limit of slow downshift speeds that adjusts the generated negative inertia torque to below an inertia torque value that can be cancelled by an engine torque-increase margin (Temax-Te) between a maximum engine torque value (Temax) and the actual engine torque (Te).

**11.** The method as claimed in claim 9, wherein:

the upshift time-constant correction factor (Km) is predetermined to ensure an upper limit of slow upshift speeds that adjusts the generated positive inertia torque to below an inertia torque value that can be cancelled by an engine torque-decrease margin (Te-Temin) between a minimum engine torque value (Temin) and an actual engine torque (Te) determined based on latest up-to-date information about the engine load; and

the downshift time-constant correction factor (Km) is predetermined to ensure the downshift speed that adjusts the generated negative inertia torque to a specified torque value, the specified torque value exceeding an inertia torque value that can be cancelled by an engine torque-increase margin (Temax-Te) between a maximum engine torque value (Temax) and the actual engine torque (Te), but causing a permissible downshift shock (ΔG) suppressed within a predetermined vehicle-occupant's permissible shift-shock range.

# FIG.1

ACCELERATOR POSITION SENSOR — 7 — (APO)

VEHICLE SPEED SENSOR — 8 — (VSP)

TRANSMISSION INPUT SPEED SENSOR — 9 — (Ni)

UPSHIFT SWITCH — 10 — (Sup)

DOWNSHIFT SWITCH — 11 — (Sdn)

TRANSMISSION CONTROLLER — 6

ENGINE TORQUE SIG. (Te)

ENGINE SPEED SIG. (Ne)

ENGINE CONTROLLER — 5

AUTOMATIC TRANSMISSION — 2

TORQUE CONVERTER — 3

ENGINE — 1

4L

4R

EP 1 865 227 A1

# FIG.2

START SHIFT-SPEED CONTROL ROUTINE

**S1** UPSHIFT SIG. Sup GENERATED? — NO (NO MANUAL UPSHIFT COMMAND SIG. OUTPUT)

YES (MANUAL UPSHIFT COMMAND SIG. OUTPUT)

**S2** DOWNSHIFT SIG. Sdn GENERATED? — NO (NO MANUAL DOWNSHIFT COMMAND SIG. OUTPUT)

YES (MANUAL DOWNSHIFT COMMAND SIG. OUTPUT)

**S3** CALCULATE UPSHIFT TIME-CONSTANT CORRECTION FACTOR Km BASED ON THROTTLE OPENING TVO AND CALCULATE CORRECTED UPSHIFT TIME CONSTANT Tgtm'

$Tgtm'=Tgtm \times Km$

**S4** CALCULATE DOWNSHIFT TIME-CONSTANT CORRECTION FACTOR Km BASED ON THROTTLE OPENING TVO AND CALCULATE CORRECTED DOWNSHIFT TIME CONSTANT Tgtm'

$Tgtm'=Tgtm \times Km$

**S5** CALCULATE TARGET TRANSMISSION RATIO NEEDED TO BRING ACTUAL TRANSMISSION RATIO FROM MANUAL SHIFT-STEP TRANSMISSION RATIO BEFORE SHIFTING TO MANUAL SHIFT-STEP TRANSMISSION RATIO AFTER SHIFTING AT SHIFT SPEED DETERMINED BASED ON THE CORRECTED SHIFT TIME CONSTANT Tgtm'

**S6** CALCULATE INERTIA TORQUE DURING SHIFTING, AND CALCULATE ENGINE-TORQUE CORRECTION VALUE (TORQUE-DOWN VALUE ΔTedn DURING UPSHIFTING; TORQUE-UP VALUE ΔTeup DURING DOWNSHIFTING) NEEDED FOR INERTIA- TORQUE CANCELLATION, AND OUTPUT THE CALCULATED ENGINE-TORQUE CORRECTION VALUE (ΔTedn OR ΔTeup) TO ENGINE CONTROLLER

END

EP 1 865 227 A1

# FIG.3A

DURING UPSHIFTING

| THROTTLE OPENING (TVO) | 0 [deg] | 20 [deg] | 40 [deg] | 60 [deg] | 80 [deg] |
|---|---|---|---|---|---|
| SHIFT TIME-CONSTANT CORRECTION FACTOR (Km) | 1.00 | 1.00 | 0.75 | 0.50 | 0.50 |

SHIFTING SPEED (RETARD DIRECTION) ◄─────

# FIG.3B

DURING DOWNSHIFTING

| THROTTLE OPENING (TVO) | 0 [deg] | 20 [deg] | 40 [deg] | 60 [deg] | 80 [deg] |
|---|---|---|---|---|---|
| SHIFT TIME-CONSTANT CORRECTION FACTOR (Km) | 0.50 | 0.75 | 1.00 | 1.00 | 1.00 |

─────► SHIFTING SPEED (RETARD DIRECTION)

EP 1 865 227 A1

# FIG.4A
COMMANDED SHIFT STEP

5TH SPEED

4TH SPEED

t1    t2

# FIG.4B
LOWER-SPEED SIDE

TRANSMISSION RATIO

4TH-SPEED EQUIVALENT TRANSMISSION RATIO

TARGET TRANSMISSION RATIO (WITH SHIFT-SPEED CONTROL)

5TH-SPEED EQUIVALENT TRANSMISSION RATIO

TIME

COMMANDED TRANSMISSION RATIO (WITH NO SHIFT-SPEED CONTROL)

# FIG.4C
RELEASED INERTIA TORQUE (POSITIVE INERTIA TORQUE)    0

TIME

# FIG.4D

WITH NO SHIFT-SPEED CONTROL

TARGET ENGINE TORQUE (tTe)

$\Delta$Tedn

(Temin)

$\alpha$

0

WITH SHIFT-SPEED CONTROL

TIME

# FIG.4E

THROTTLE OPENING TVO

WITH NO SHIFT-SPEED CONTROL

0

WITH SHIFT-SPEED CONTROL

TIME

# FIG.4F

WITH SHIFT-SPEED CONTROL

VEHICLE ACCELERATION

WITH NO SHIFT-SPEED CONTROL

0

TIME

19

# FIG.5A

COMMANDED SHIFT STEP

5TH SPEED

4TH SPEED

t1    t2

# FIG.5B

LOWER-SPEED SIDE

COMMANDED TRANSMISSION RATIO
(WITH NO SHIFT-SPEED CONTROL)

4$^{TH}$-SPEED EQUIVALENT
TRANSMISSION RATIO

TRANSMISSION RATIO

5$^{TH}$-SPEED EQUIVALENT
TRANSMISSION RATIO

TARGET TRANSMISSION RATIO
(WITH SHIFT-SPEED CONTROL)

TIME

# FIG.5C

ABSORBED INERTIA TORQUE
(NEGATIVE INERTIA TORQUE)

0

TIME

# FIG.5D

TARGET ENGINE TORQUE
(tTe)

(Temax)

β

ΔTeup

0

TIME

# FIG.5E

THROTTLE OPENING TVO

FULL THROTTLE

0

TIME

# FIG.5F

VEHICLE ACCELERATION

0

TIME

**FIG.6A**

COMMANDED SHIFT STEP

5TH SPEED          4TH SPEED

t1          t2

**FIG.6B**

LOWER-SPEED SIDE

COMMANDED TRANSMISSION RATIO (WITH NO SHIFT-SPEED CONTROL)

4$^{TH}$-SPEED EQUIVALENT TRANSMISSION RATIO

TRANSMISSION RATIO

5$^{TH}$-SPEED EQUIVALENT TRANSMISSION RATIO

TARGET TRANSMISSION RATIO (WITH MODIFIED SHIFT-SPEED CONTROL)

TIME

**FIG.6C**

ABSORBED INERTIA TORQUE (NEGATIVE INERTIA TORQUE)    0

TIME

**FIG.6D**

$\beta$

(Temax)

TARGET ENGINE TORQUE (tTe)

$\Delta$Teup

$\gamma$

0

TIME

**FIG.6E**

FULL THROTTLE

THROTTLE OPENING TVO

0

TIME

**FIG.6F**

VEHICLE ACCELERATION

$\Delta$G (PERMISSIBLE SHIFT SHOCK HAVING POP-DOWN FEELING)

0

TIME

21

# FIG.7

ENGINE LOAD SUCH AS THROTTLE OPENING TVO,
ACCELERATOR OPENING APO, BOOST PRESSURE, ETC.
→

ENGINE SPEED Ne →

ENGINE LOAD

ENGINE OUTPUT TORQUE Te

A1
A2
B1
B2

ENGINE OUTPUT TORQUE Te (y-axis)
ENGINE SPEED Ne (x-axis)
0

→ ENGINE OUTPUT TORQUE Te

EP 1 865 227 A1

EP 1 865 227 A1

# FIG.8A

COMMANDED SHIFT STEP

5TH SPEED

4TH SPEED

t1　　　　t2

# FIG.8B

LOWER-SPEED SIDE

TRANSMISSION RATIO

4TH-SPEED EQUIVALENT TRANSMISSION RATIO

ACTUAL TRANSMISSION RATIO

5TH-SPEED EQUIVALENT TRANSMISSION RATIO

COMMANDED TRANSMISSION RATIO

TIME

# FIG.8C

RELEASED INERTIA TORQUE (POSITIVE INERTIA TORQUE)

0

CANCELLED INERTIA TORQUE

LACK OF CANCELLATION

TIME

# FIG.8D

TARGET ENGINE TORQUE (tTe)

(Temin)

ΔTedn

0

TIME

# FIG.8E

THROTTLE OPENING TVO

0

TIME

# FIG.8F

VEHICLE ACCELERATION

0

TIME

23

# FIG.9A

COMMANDED SHIFT STEP

5TH SPEED

4TH SPEED

t1    t2

# FIG.9B

LOWER-SPEED SIDE

TRANSMISSION RATIO

COMMANDED TRANSMISSION RATIO

5TH-SPEED EQUIVALENT TRANSMISSION RATIO

4TH-SPEED EQUIVALENT TRANSMISSION RATIO

ACTUAL TRANSMISSION RATIO

TIME

# FIG.9C

ABSORBED INERTIA TORQUE (NEGATIVE INERTIA TORQUE)

0

LACK OF CANCELLATION

CANCELLED INERTIA TORQUE

TIME

# FIG.9D

TARGET ENGINE TORQUE (tTe)

(Temax)

ΔTeup

0

TIME

# FIG.9E

THROTTLE OPENING TVO

FULL THROTTLE

0

TIME

# FIG.9F

VEHICLE ACCELERATION

0

TIME

**EP 1 865 227 A1**

European Patent Office

**EUROPEAN SEARCH REPORT**

Application Number

EP 07 01 1173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 086 666 A (MORIKI DAISAKU [JP]) 11 February 1992 (1992-02-11) * column 3, lines 19-33; claim 1; figures 1,3-6 * * column 3, lines 45-60 * ----- | 1,6 | INV. F16H61/04 F16H61/08 F16H61/662 B60W10/06 B60W10/10 |
| A | US 5 839 987 A (SAWAMURA KAZUTOMO [JP] ET AL) 24 November 1998 (1998-11-24) * column 15, lines 9-23; claims 1-3; figures 2,5A-5K,11 * ----- | 1,6,7 | |
| A | EP 1 647 741 A (NISSAN MOTOR [JP]) 19 April 2006 (2006-04-19) * paragraphs [0001], [0002], [0006], [0007], [0023], [0045], [0049]; claim 1; figures 1,2 * ----- | 1-11 | |
| A,D | US 5 976 054 A (YASUOKA MASAYUKI [JP]) 2 November 1999 (1999-11-02) * the whole document * ----- | 1-11 | |

| TECHNICAL FIELDS SEARCHED (IPC) |
|---|
| F16H B60W B60K |

The present search report has been drawn up for all claims

| Place of search | Date of completion of the search | Examiner |
|---|---|---|
| Berlin | 19 September 2007 | MATOS GONCALVES, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

25

## ANNEX TO THE EUROPEAN SEARCH REPORT
## ON EUROPEAN PATENT APPLICATION NO.

EP 07 01 1173

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2007

| Patent document cited in search report | | Publication date | Patent family member(s) | | Publication date |
|---|---|---|---|---|---|
| US 5086666 | A | 11-02-1992 | JP | 3037473 A | 18-02-1991 |
| US 5839987 | A | 24-11-1998 | DE | 69707048 D1 | 08-11-2001 |
| | | | DE | 69707048 T2 | 14-02-2002 |
| | | | EP | 0805060 A2 | 05-11-1997 |
| | | | JP | 3594734 B2 | 02-12-2004 |
| | | | JP | 9296745 A | 18-11-1997 |
| EP 1647741 | A | 19-04-2006 | CN | 1760519 A | 19-04-2006 |
| | | | JP | 2006112255 A | 27-04-2006 |
| | | | KR | 20060052173 A | 19-05-2006 |
| | | | US | 2006234830 A1 | 19-10-2006 |
| US 5976054 | A | 02-11-1999 | DE | 19828603 A1 | 04-02-1999 |
| | | | JP | 3341633 B2 | 05-11-2002 |
| | | | JP | 11020512 A | 26-01-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11020512 A
- US 5976054 A
- JP 2006159698 A